Europäisches Patentamt

European Patent Office

Office européen des brevets

(11) Veröffentlichungsnummer : **0 092 125**
**B1**

(12) **EUROPÄISCHE PATENTSCHRIFT**

(45) Veröffentlichungstag der Patentschrift :
30.07.86

(21) Anmeldenummer : 83103465.7

(22) Anmeldetag : 09.04.83

(51) Int. Cl.⁴ : **G 01 L  1/12**

(54) **Kraftmessanordnung mit einem magnetoelastischen Kraftmessgeber.**

(30) Priorität : **19.04.82 SE 8202432**

(43) Veröffentlichungstag der Anmeldung :
**26.10.83 Patentblatt 83/43**

(45) Bekanntmachung des Hinweises auf die Patenterteilung : **30.07.86 Patentblatt 86/31**

(84) Benannte Vertragsstaaten :
**DE FR GB IT**

(56) Entgegenhaltungen :
**DD-A-   145 565**
**DE-B-  1 120 722**
**DE-C-   955 272**
**Siemens-Zeitschrift. 29 (1955), Heft 5/6 Seite 219-222**

(73) Patentinhaber : **ASEA AB**

**S-721 83 Västeras (SE)**

(72) Erfinder : **Valdemarsson, Stefan, Dipl.-Ing.**
**Heimersväg 18**
**S-723 55 Västeras (SE)**

(74) Vertreter : **Boecker, Joachim, Dr.-Ing.**
**Rathenauplatz 2-8**
**D-6000 Frankfurt a.M. 1 (DE)**

**Beschreibung**

Die Erfindung betrifft eine Kraftmeßanordnung mit einem magnetoelastischen Kraftmeßgeber gemäß dem Oberbegriff des Anspruches 1. Eine derartige Anordnung ist z. B. aus SE-A-151 267 bekannt.

Die Erfindung ist für solche magnetoelastischen Geber vorgesehen, bei denen die Signalspannung aus der Differenz zwischen zwei magnetischen Wechselflüssen gewonnen wird, wobei entweder die Magnetflüsse oder die von den beiden Magnetflüssen induzierten Spannungen voneinander subtrahiert werden.

Bei solchen Gebern ist die Signalspannung in hohem Maße von der Amplitude des Erregerstroms abhängig, so daß diese bei der Signalgleichrichtung nach bekannten Methoden konstant gehalten und von Netzspannungsvariationen unabhängig gemacht wird, beispielsweise mittels einer magnetischen Konstantspannungsvorrichtung. Solche Vorrichtungen haben jedoch den Nachteil, daß sich die Kurvenform der Spannung und somit auch die des Erregerstroms mit den Netzspannungsvariationen verändert, und die Veränderung der Kurvenform wirkt sich auf die Signalspannung des Gebers und das entsprechende Ausgangssignal bei normaler phasenempfindlicher Gleichrichtung aus, bei der die Polaritätsumkehr erfolgt, wenn der Erregerstrom den Maximalwert passiert.

Der Erfindung liegt die Aufgabe zugrunde, eine Kraftmeßanordnung der eingangs genannten Art zu entwickeln, bei welcher sich Veränderungen der Amplitude oder der Kurvenform des Erregerstromes auf das Meßergebnis nicht auswirken.

Zur Lösung dieser Aufgabe wird eine Kraftmeßanordnung nach dem Oberbegriff des Anspruches 1 vorgeschlagen, welche erfindungsgemäß die im kennzeichnenden Teil des Anspruches 1 genannten Merkmale hat.

Eine vorteilhafte Weiterbildung der Erfindung ist im abhängigen Anspruch angegeben.

Gemäß der Erfindung wird die Signalgleichrichtung so vorgenommen, daß die Polwendung der Signalspannung beginnt, wenn der Erregerstrom mit einer beispielsweise negativen Zeitableitung ein negatives Bezugsniveau passiert, und daß die Polaritätsumkehr solange anhält, bis der Erregerstrom mit einer positiven Zeitableitung ein positives Bezugsniveau passiert. Das Ausgangssignal, d. h. der Mittelwert der gleichgerichteten Signalspannung, wird dann von dem Wert des Sekundärflusses zu den Zeitpunkten bestimmt, in denen der Erregerstrom ein Bezugsniveau passiert, und der Mittelwert des Ausgangssignals wird hierdurch von der Kurvenform und der Amplitude des Erregerstroms unabhängig.

Anhand der Figuren soll die Erfindung näher erläutert werden. Es zeigen

Figur 1 ein Ausführungsbeispiel eines magnetoelastischen Kraftmeßgebers, bei dem die Anordnung nach der Erfindung eingesetzt werden kann,

Figur 2a ein erstes Ausführungsbeispiel einer Kraftmeßanordnung gemäß der Erfindung,

Figur 2b ein zweites Ausführungsbeispiel einer Kraftmeßanordnung gemäß der Erfindung,

Figur 3 Diagramme für den zeitlichen Verlauf verschiedener zur Erläuterung der Erfindung wichtiger Größen.

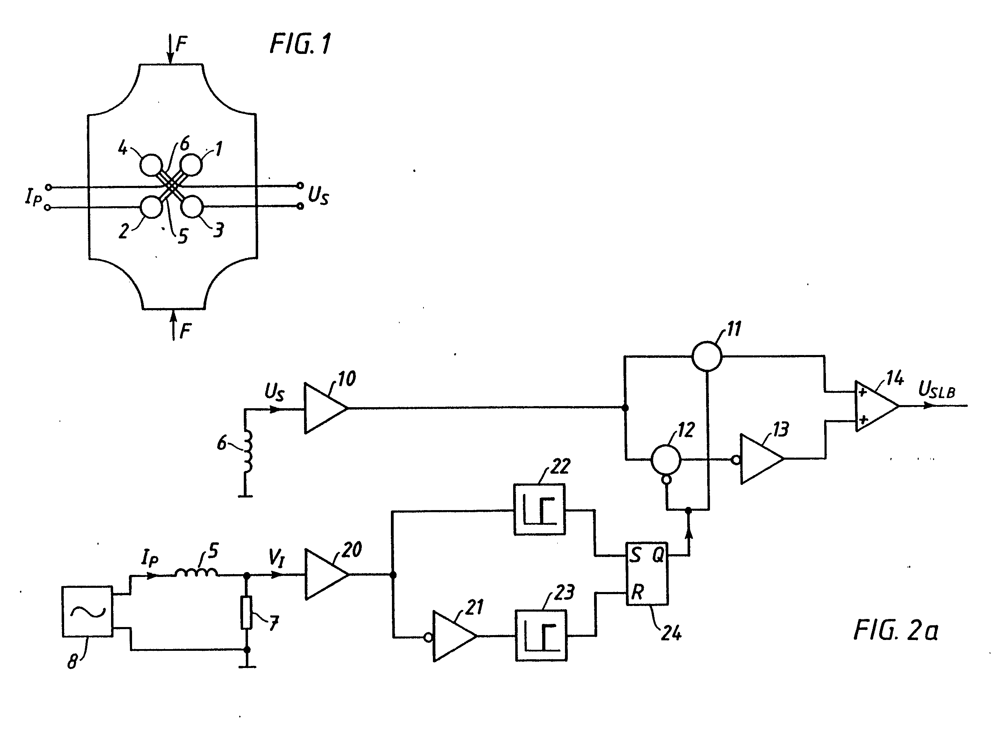

Der in Figur 1 gezeigte Kraftmeßgeber ist aus der SE-A-151 267 bekannt. Der Geber besteht im wesentlichen aus einem Kern, der aus einer Vielzahl zusammengeklebter Blechlamellen aus weichmagnetischem Material aufgebaut ist. Der Kern hat vier durchgehende Löcher 1 bis 4, die in den Ecken eines Quadrats angeordnet sind. Durch je zwei diagonal gegenüberliegende Löcher ist je eine Wicklung gewickelt, und zwar durch die Löcher 1 und 2 die Erregerwicklung 5, die von einem Erregerstrom $I_P$ gespeist wird, und durch die Löcher 3 und 4 die Meßwicklung 6, in welche die Signalspannung $U_S$ induziert wird. Die Buchstabenbezeichnungen knüpfen an die Ähnlichkeit des Gebers mit einem Transformator an, und aus diesem Grunde wird auch im Folgenden von primären und sekundären Größen gesprochen. Wenn das Blech magnetisch nicht orientiert ist, ist die Signalspannung bei unbelastetem Zustand des Magnetkerns Null. Wenn der Geber durch die in Figur 1 bezeichnete Kraft belastet wird, wird eine Signalspannung $U_S$ induziert, die der Kraft F proportional ist. Durch Gleichrichtung der Signalspannung, beispielsweise mit Hilfe phasenempfindlicher Gleichrichter, kann in bekannter Weise ein der Kraft F proportionales Ausgangssignal erzeugt werden.

Figur 2a zeigt ein Ausführungsbeispiel einer Anordnung gemäß der Erfindung. Die Erregerwicklung 5 des Gebers wird von einer Wechselspannungsquelle 8, bei der es sich um einen Oszillator handeln kann, mit einem Strom geeigneter Frequenz, z. B. 50 Hz, gespeist. In Reihe mit der Wicklung liegt ein Widerstand 7, an dem eine Spannung $V_I$ abfällt, die dem Erregerstrom $I_P$ proportional ist.

Die Spannung $V_I$ wird einem Verstärker 20 zugeführt, dessen Ausgangsspannung einem ersten Niveaudetektor 22 direkt und einem zweiten Niveaudetektor 23 über ein invertierendes Glied 21 zugeführt wird. Der Niveaudetektor 22 gibt eine Ausgangsspannung ab, wenn die Spannung $V_I$ das eingestellte positive Bezugsniveau überschreitet. Die Ausgangsspannung des Niveaudetektors 22 geht auf den Eingang S der bistabilen Kippstufe 24 und stellt deren Ausgang auf Eins (Signal vorhanden). Der Niveaudetektor 23 ist auf den Eingang R der Kippstufe geschaltet, und wenn die Spannung $V_I$ in negativer Richtung das eingestellte Niveau des Niveaudetektors 23 überschreitet, dann wird die Kippstufe 24 durch das am Eingang R erscheinende Signal auf Null zurückgestellt, d. h. das Ausgangssignal der Kippstufe verschwindet. Der Ausgang der Kippstufe wird auf zwei steuerbare elektronische Schalter 11 und 12 geschaltet, von denen der letztere einen invertierten Steuereingang hat.

Die in der Meßwicklung 6 des Gebers induzierte Signalspannung $U_S$ wird einem Verstärker 10 zugeführt, dessen Ausgangssignal einerseits über den Schalter 11 und andererseits über die Schalter 12 und ein invertierendes Glied 13 einem summierenden Verstärker 14 zugeführt wird, dessen Ausgangssignal $U_{SLB}$ nach der Filterung den gewünschten Meßwert darstellt.

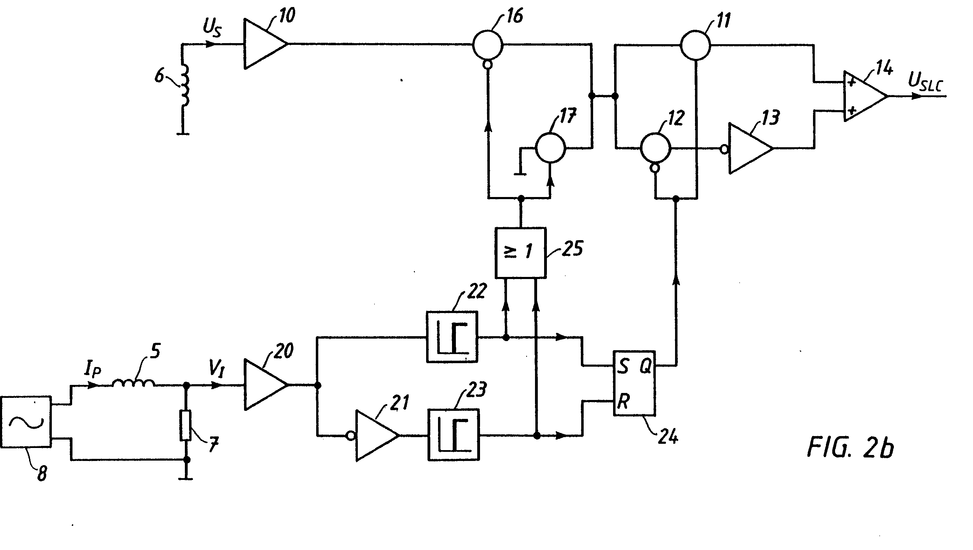

Figur 2b zeigt ein anderes Ausführungsbeispiel gemäß der Erfindung. Dieses unterscheidet sich von der Anordnung nach Figur 2a dadurch, daß vor den Schaltern 11, 12 zwei weitere Schalter 16, 17 angeordnet sind. Diese werden von der Ausgangsspannung eines ODER-Gliedes 25 gesteuert, dem die Ausgangsspannungen der Niveaudetektoren 22 und 23 zugeführt werden. Wenn die Ausgangsspannung des Gliedes 25 « 1 » (Signal vorhanden) ist, wird über den Schalter 17 Erde (Spannung Null) an die Schalter 11 und 12 gelegt. Wenn die Ausgangsspannung des Gliedes 25 « 0 » ist, wird die Signalspannung $U_S$ über den Verstärker 10 und den Schalter 16 an die Schalter 11 und 12 angeschlossen.

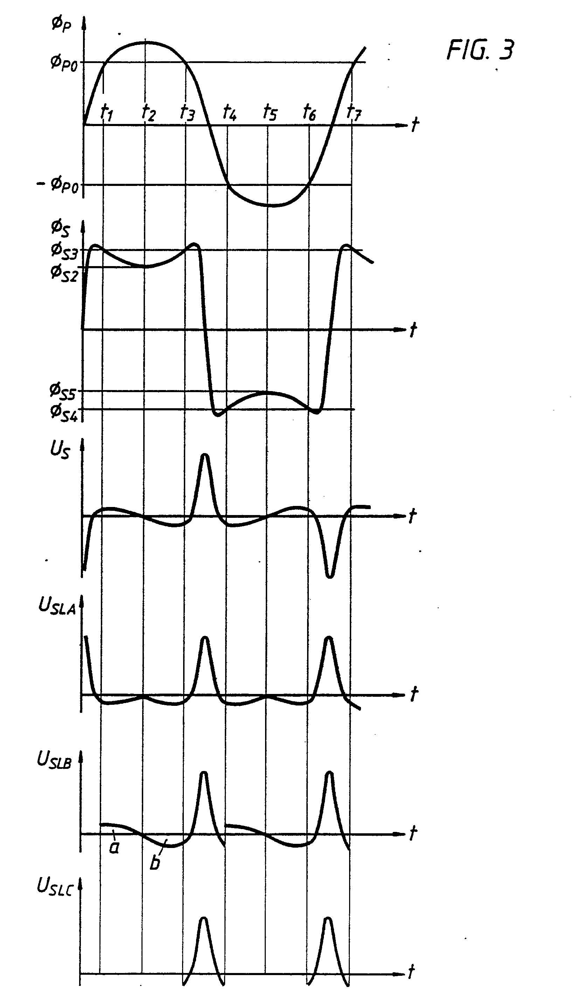

Figur 3 zeigt den zeitlichen Verlauf des magnetischen Flusses im Geber und verschiedener anderer Signale, die in der Anordnung auftreten können. Der Einfachheit halber ist dabei angenommen, daß die magnetische Hysterese des Kernmaterials des Kraftmeßgebers vernachlässigbar ist. Der von dem Erregerstrom erzeugte Primärfluß $\phi_P$ (oberstes Diagramm) ist daher symmetrisch und unterscheidet sich vom Verlauf des nicht dargestellten Erregerstroms nur durch eine gewisse sättigungsbedingte Abflachung der Kuppen. In diesem Diagramm sind auch die Bezugsniveaux der Niveaudetektoren 22, 23, hier $\phi_{P0}$ und — $\phi_{P0}$, eingetragen, wobei der Flußverlauf gemäß der Erfindung die Signalverarbeitung, insbesondere die phasenempfindliche Gleichrichtung, steuern soll. Ferner sind einige Zeitpunkte $t_1$ bis $t_7$ markiert, bei denen es sich um charakteristische Steuerzeitpunkte bei verschiedenen hier behandelten Arten der Signalverarbeitung handelt.

Die nächste Kurve zeigt den infolge der Kraft F durch die Meßwicklung erfaßten Sekundärfluß $\phi_S$. Der stark verzerrte Verlauf hängt damit zusammen, daß der Sekundärfluß als ein Differenzfluß aus zwei annähernd gleich großen Teilen des Primärflusses mit unterschiedlichem Oberwellengehalt gedeutet werden kann. Die von dem Sekundärfluß induzierte Signalspannung $U_S$ ist folglich ebenfalls stark verzerrt, wie aus dem nächsten Diagramm hervorgeht.

Die folgende Kurve zeigt das gleichgerichtete Signal $U_{SLA}$, das auf übliche Weise mit den Polaritätsumkehrzeitpunkten $t_2$ und $t_5$ phasenempfindlich gleichgerichtet wurde. Der Mittelwert $U_{MA}$ des auf diese Weise gleichgerichteten Signals $U_{SLA}$ wird :

$$U_{MA} = \frac{2}{T} \int_{t_2}^{t_5} - N_S \frac{d\phi_S}{dt} \, dt = - \frac{2}{T} N_S \int_{\phi_{S2}}^{\phi_{S5}} d\phi_S = \frac{2}{T} N_S(\phi_{S2} - \phi_{S5})$$

Hierbei ist T die Periodendauer des Erregerstroms und $N_S$ die Windungszahl der Meßwicklung (Sekundärwicklung). Wenn sich die Amplitude oder die Kurvenform des Erregerstroms ändert, so werden auch $\phi_{S2}$ und $\phi_{S5}$ und damit der Wert von $U_{MA}$ geändert, was nicht erwünscht ist.

Die Erfindung beseitigt dieses Problem durch eine Form der Signalverarbeitung, bei der die Polaritätsumkehr in Abhängigkeit davon gesteuert wird, wann die Zeitableitung (zeitlicher Differentialquotient) des Primärflusses beziehungsweise des Erregerstromes mit einem Bestimmten Vorzeichen ein positives und ein negatives Bezugsniveau passiert.

Das zweitunterste Diagramm zeigt den Verlauf des gleichgerichteten Signals $U_{SLB}$ für den Fall, daß die Polwendung der Signalspannung im Zeitpunkt $t_4$ beginnt, in dem der Primärfluß mit negativer Zeitableitung (negativer Steigung) das negative Bezugsniveau — $\phi_{P0}$ passiert, und bis zu dem Zeitpunkt $t_7$ anhält, in dem der Primärfluß mit positiver Zeitableitung das positive Bezugsniveau $\phi_{P0}$ passiert. Der Mittelwert $U_{MB}$ des gleichgerichteten Signals $U_{SLB}$ wird dann gemäß der früheren Gleichung :

$$U_{MB} = - \frac{2}{T} N_S(\phi_{S4} - \phi_{S7})$$

Der Sekundärfluß $\phi_S$ ist (bei vernachlässigbarer Hysterese) eine eindeutige Funktion des Primärflusses $\phi_P$ und der auf den Geber aufgebrachten Kraft F gemäß :

$$\phi_S = f(\phi_P, F)$$

Somit wird der zeitliche Mittelwert $U_{MB}$ des Signals $U_{SLB}$

$$U_{MB} = - \frac{2}{T} N_S[f(\phi_{P4}, F) - f(\phi_{P7}, F)]$$

Da jedoch $\phi_{P4} = - \phi_{P0}$ und $\phi_{P7} = + \phi_{P0}$ ist, erhält man

$$U_{MB} = - \frac{2}{T} N_S[f(- \phi_{P0}, F) - f(\phi_{P0}, F)]$$

Wenn das Kernmaterial, wie oben angenommen wurde, hysteresefrei ist, wird also $U_{MB}$ von Veränderungen des Primärflusses $\phi_P$ unabhängig, so lange die Amplitude größer als $\pm \phi_{P0}$ ist. Dies wird

3

auch durch die Kurvenform für $U_{SLB}$ veranschaulicht, wo die Fläche unter der Kurve im Intervall $t_1$ bis $t_3$ aus einem positiven Teil a und einem, wie man sieht, gleich großen kompensierenden, negativen Teil b besteht. Diese Gleichheit zwischen den Flächen a und b entspricht bei hysteresefreiem Material, bei dem der zeitliche Verlauf des Primärflusses in Bezug auf ca. $t_2$ symmetrisch ist, auch der Wirklichkeit.

Die Schaltung gemäß Figur 2a arbeitet im vorgenannten Sinne. Die Kippstufe 24 wird im Zeitpunkt $t_1$ während jeder Periode auf Eins und im Zeitpunkt $t_4$ auf Null gestellt. In Intervall $t_1$ bis $t_4$ ist daher der Schalter 11 durchgeschaltet und $U_{SLB}$ ist gleich $U_S$. Im Intervall $t_4$ bis $t_7$ ist der Schalter 12 durchgeschaltet, und $U_{SLB}$ ist gleich $—U_S$. Auf diese Weise erhält man die phasenempfindliche Gleichrichtung gemäß der Erfindung und das gleichgerichtete Signal $U_{SLB}$ gemäß Figur 3, vorletztes Diagramm.

Wenn man die Hysterese des Kernmaterials berücksichtigt, sind die Flächen a und b nicht mehr gleich. Es kann dann zweckmäßig sein, diese Anteile der Kurve im Ausgangssignal zu unterdrücken, wie dies in dem untersten Diagramm in Figur 3 dargestellt ist. Dieses Diagramm zeigt den Verlauf des gleichgerichteten Signals $U_{SLC}$ für den Fall, daß die Polaritätsumkehr der Signalspannung im Zeitpunkt $t_6$ beginnt, in dem der Primärfluß mit positiver Ableitung das negative Bezugsniveau $— \phi_{P0}$ passiert, und bis zum Zeitpunkt $t_7$ anhält, in dem der Primärfluß mit positiver Ableitung das positive Bezugsniveau $\phi_{P0}$ passiert. In den Intervallen $t_1$ bis $t_3$ und $t_4$ bis $t_6$, in denen der Primärfluß einen höheren absoluten Betrag als das entsprechende Bezugsniveau hat, wird das Signal auf Null gehalten. Der Mittelwert $U_{MC}$ des auf diese Weise gleichgerichteten Signals $U_{SLC}$ wird gleich $U_{MB}$ bei der vorstehend beschriebenen Art der Gleichrichtung, ist jedoch von der Hysterese des Materials unabhängiger.

Diese Art der Gleichrichtung erhält man mit der Anordnung gemäß Figur 2b. Während der Intervalle $t_1$ bis $t_3$ und $t_4$ bis $t_6$ ist die Ausgangsspannung des ODER-Gliedes 25 « 1 ». Der Schalter 17 verbindet während dieser Intervalle die Eingänge der Schalter 11, 12 mit Erde, und $U_{SLC}$ wird während dieser Intervalle Null. Während der Intervalle $t_3$ bis $t_4$ und $t_6$ bis $t_7$ ist die Ausgangsspannung des ODER-Gliedes « 0 », und die Arbeitsweise ist dann dieselbe wie bei der Anordnung nach Figur 2a, d. h. zwischen $t_3$ und $t_4$ wird $U_{SLC} = U_S$, und zwischen $t_6$ und $t_7$ wird $U_{SLC} = — U_S$.

Bei den vorstehend beschriebenen Ausführungsbeispielen gemäß Figur 2 dient der Erregerstrom als Maß für den Primärfluß und steuert die Signalverarbeitung. Alternativ kann jedoch der Primärfluß abgetastet und zur Steuerung verwendet werden, oder es kann eine andere geeignete, dem Primärfluß entsprechende Größe verwendet werden.

Bei der in Figur 2a gezeigten Anordnung wird der phasenempfindliche Gleichrichter (11, 12, 13) zu den Zeitpunkten $t_1$, $T_4$, $t_7$ usw. umgeschaltet. Alternativ kann die Umschaltung natürlich auch zu den Zeitpunkten $t_3$, $t_6$ usw. erfolgen.

Bei der in Figur 2b gezeigten Anordnung wird der Gleichrichter auch zu den Zeitpunkten $t_1$, $t_4$, $t_7$ usw. umgeschaltet. Die Umschaltung kann aber natürlich jederzeit innerhalb der Intervalle $t_1$ bis $t_3$ und $t_4$ bis $t_6$ erfolgen, in denen der Primärfluß die Bezugsniveaus überschreitet und das Ausgangssignal ($U_{SLC}$) auf Null gehalten wird.

## Patentansprüche

1. Kraftmeßanordnung mit einem magnetoelastischen Kraftmeßgeber, der einen Kern aus magnetostriktivem Material enthält, mit mindestens einer wechselstromgespeisten Erregerwicklung (5), die einen magnetischen Primärfluß ($\phi_P$) erzeugt, und mindestens einer Meßwicklung (6), in der ein von der zu messeden Kraft (F) abhängiger Sekundärfluß ($\phi_S$) eine Signalspannung ($U_S$) induziert, und mit einer Signalverarbeitungsschaltung, dadurch gekennzeichnet, daß die Signalverarbeitungsschaltung steuerbare Polaritätsumkehrvorrichtungen (11, 12, 13) und eine Addierstufe (14) zur Erzeugung eines Ausgangssignals ($U_{SLB}$) durch periodische Polaritätsumkehr der Signalspannung ($U_S$) enthält, daß Steuerglieder (21, 22, 23, 24) vorhanden sind, welche erfassen, wann der Primärfluß ($\phi_P$) ein positives und ein negatives Bezugsniveau ($\phi_{P0}$, $— \phi_{P0}$) über- oder unterschreitet, und welche während jeder Periode die Polaritätsumkehrvorrichtungen zu den Zeitpunkten (z. B. $t_4$ und $t_7$ oder $t_3$ und $t_6$) umschalten, in denen der Primärfluß das positive Bezugsniveau ($\phi_{P0}$) über- oder unterschreitet und gleichzeitig seine zeitliche Ableitung ein bestimmtes Vorzeichen aufweist, und in denen der Primärfluß das negative Bezugsniveau ($— \phi_{P0}$) über- oder unterschreitet und gleichzeitig seine zeitliche Ableitung ein entgegengesetztes Vorzeichen aufweist.

2. Kraftmeßanordnung nach Anspruch 1, dadurch gekennzeichnet, daß die Signalverarbeitungsschaltung Glieder (17, 25) enthält, die das Ausgangssignal ($U_{SLC}$) während der Zeitintervalle ($t_1$-$t_3$ ; $t_4$-$t_6$) auf Null halten, in denen der Augenblickswert des Primärflusses außerhalb des zwischen dem positiven ($\phi_{P0}$) und dem negativen ($— \phi_{P0}$) Bezugsniveau liegenden Bereichs liegt.

## Claims

1. A force measuring means with a magnetoelastic force transducer comprising a core of magnetostrictive material with at least one excitation winding (5) supplied with alternating current and

# 0 092 125

generating a magnetic primary flux ($\phi_P$), and with at least one measuring winding (6) in which a signal voltage ($U_S$) is induced by a secondary flux ($\phi_S$) that is dependent on the force (F) to be measured, and with a signal processing unit, characterized in that said signal processing unit includes controllable polarity reversal devices (11, 12, 13) and a summation device (14) for generating in output signal ($U_{SLB}$) by periodic polarity reversal of the signal voltage ($U_S$), and that there are control members (21, 22, 23, 24) for detecting when the primary flux ($\phi_P$) exceeds or falls below a positive and a negative reference level ($\phi_{P0}$, $-\phi_{P0}$), and reversing the polarity reversal devices in each period at such times (for example $t_4$ and $t_7$ or $t_3$ and $t_6$) in which said primary flux exceeds or falls below the positive reference level ($\phi_{P0}$) and simultaneously its time derivative has a specific sign, and in which the primary flux exceeds or falls below the negative reference level ($-\phi_{P0}$) and simultaneously its time derivative has an opposite sign.

2. Force measuring means according to claim 1, characterized in that the signal processing unit includes devices (17, 25), keeping the output signal ($U_{SLC}$) at zero during those time intervals ($t_1$-$t_3$ ; $t_4$-$t_6$) in which the instantaneous value of the primary flux lies outside the area between the positive ($\phi_{P0}$) and the negative ($-\phi_{P0}$) reference level.

## Revendications

1. Dispositif dynamométrique avec un capteur de force qui comporte un noyau en un matériau magnétoélastique, avec au moins un enroulement d'excitation (5) alimenté en courant alternatif et produisant un flux magnétique primaire ($\phi_P$), et au moins un enroulement de mesure (6) dans lequel un flux secondaire ($\phi_S$) qui dépend de la force (F) à mesurer, induit une tension de signal ($U_S$), et avec un circuit de traitement du signal, caractérisé par le fait que le circuit de traitement du signal comporte des dispositifs commandables d'inversion de polarité (11, 12, 13) et un étage additionneur (14) pour produire un signal de sortie ($U_{SLB}$) par inversion périodique de la polarité de la tension du signal ($U_S$), que des dispositifs de commande (21, 22, 23, 24) sont prévus qui détectent l'instant où le flux primaire ($\phi_P$) passe au-dessus ou en dessous d'un niveau de référence positif et un niveau de référence négatif ($\phi_{P0}$, $-\phi_{P0}$) et commutent, pendant chaque période, les dispositifs d'inversion de la polarité aux instants (par exemple $t_4$ et $t_7$ ou $t_3$ et $t_6$) auxquels le flux primaire passe au-dessus ou en dessous du niveau de référence positif ($\phi_{P0}$), alors qu'en même temps sa dérivée par rapport au temps présente un signe déterminé, et auxquels le flux primaire passe au-dessus ou en dessous du niveau de référence négatif ($-\phi_{P0}$) alors qu'en même temps sa dérivée par rapport au temps présente un signe opposé.

2. Dispositif dynamométrique selon la revendication 1, caractérisé par le fait que le circuit de traitement du signal comporte des dispositifs (17, 25) qui maintiennent à la valeur zéro le signal de sortie ($U_{SLC}$) pendant les intervalles de temps ($t_1$-$t_3$ ; $t_4$-$t_6$) durant lesquels la valeur instantanée du flux primaire se situe en dehors de la page comprise entre le niveau de référence positif ($\phi_{P0}$) et le niveau de référence négatif ($-\phi_{P0}$).

5

FIG.1

FIG.2a

FIG. 2b

FIG. 3

0 092 125

3